# EUROPÄISCHE PATENTANMELDUNG

(11) **EP 2 789 310 A2**
(43) Veröffentlichungstag der Anmeldung: **15.10.2014**
(21) Anmeldenummer: 14000891.3
(22) Anmeldetag: 12.03.2014
(51) Int. Cl.: A61C 13/34, A61C 13/00

(54) **Rohling zur Herstellung eines dentalen Arbeitsmodells**

(30) Priorität: 11.04.2013 DE 202013003384 U; 18.06.2013 DE 202013005457 U
(71) Anmelder: Ernst Hinrichs GmbH, Dental- und Gipspräparate, 38644 Goslar (DE)
(72) Erfinder: Rehse, Christian, 38644 Goslar (DE); Rehse, Markus, 38644 Goslar (DE)
(74) Vertreter: Callies, Rainer Michael

(57) **Zusammenfassung**

Die Erfindung betrifft einen Rohling (14) zur Herstellung eines Arbeitsmodells, welches als Arbeitsmittel bei der Anfertigung einer zahnmedizinischen Rekonstruktion dient. Der Rohling (14) weist als ein Herstellungmaterial zumindest Gips auf. Der Rohling (14) hat einen zur Modellierung vorgesehenen Gipsteil (15) und eine Basisplatte (1). Der Gipsteil (15) besitzt einen Zahnbereich (16) mit einer Form und einer Gipsmasse, die beide einerseits zur Herstellung eines Arbeitsmodells eines zu modellierenden Gebissabschnitts ausreichend sind und andererseits so beschränkt sind, dass sie dem Gebissabschnitt umrisshaft und mengenmäßig bereits angenähert sind. Die Basisplatte (1) besitzt mehrere Pins, mit denen der Gipsteil (15) an der Basisplatte (1) durch ein Umgießen der Pins lösbar befestigt ist. Mit dem erfindungsgemäßen Rohling kann der Zeit- und Kostenaufwand für die Herstellung eines Arbeitsmodells verringert und die Qualität verbessert werden. Ferner bezieht sich die Erfindung auf eine Halterung zur Fixierung eines solchen Rohlings (14) in einer Fräsmaschine.

## Beschreibung

Die Erfindung betrifft einen Rohling zur Herstellung eines Arbeitsmodells nach dem Oberbegriff des Anspruchs 1. Ferner bezieht sich die Erfindung auf eine Halterung zur Fixierung eines solchen Rohlings in einer Fräsmaschine.

Eine Anfertigung von Arbeitsmodellen, die auch als Kontrollmodelle bezeichnet werden, ist eine Grundvoraussetzung für die Herstellung von Zahnersatz und zahntechnischen bzw. zahnmedizinischen Apparaturen jeglicher Art. Eine übliche und zur Zeit noch ganz überwiegend durchgeführte Vorgehensweise ist die direkte Abdrucknahme im Mund des Patienten. Hierbei kommt eine Vielzahl von Abdruckmaterialien zum Einsatz, die in ihren technischen Eigenschaften mit den Anforderungen des zu erstellenden Zahnersatzes bzw. der zahnmedizinischen Rekonstruktion korrespondieren. Der so generierte Abdruck wird mit Modellmaterial, bei dem es sich zumeist um Gips handelt, ausgegossen, so dass ein detailgetreues Positiv der Mundsituation hergestellt werden kann. Dieses Arbeitsmodell dient einem Zahntechniker bei der Herstellung einer zahnmedizinischen Rekonstruktion als Arbeitsgrundlage. Bei einer solchen Rekonstruktion kann es sich beispielsweise um Brückengerüste, Kappen und Modellgussgerüste oder auch eine zahntechnische Keramikverblendung handeln. Das Arbeitsmodell dient zur Sicherung der Qualität im Zahntechnikerlabor und in der Zahnarztpraxis.

Als relativ neue Entwicklung wird in zunehmendem Maße als Alternative zu der oben beschriebenen Abformung im Mundbereich eine orale Abscannung direkt im Patientenmund durchgeführt. Bei dieser intraoralen Abscannung entfällt jedoch der gegenständliche Abdruck, mit dessen Hilfe herkömmlich wie oben beschrieben ein passgenaues Arbeitsmodell hergestellt werden kann.

Zum Hintergrund der Erfindung sei hier zunächst die grundsätzliche Funktion eines Intraoralscanners beschrieben: Ein solcher Scanner ist mit einer hochkomplexen Messoptik ausgestattet. Mit mehreren Stereo-Videobildern pro Sekunde lassen sich die Zähne eines Patienten wie bei einem Video aufnehmen. Die Aufnahmeeinheit befindet sich in einem frei beweglichen Handstück mit integrierter Optik. Der Kamerakopf wird durch Körperwärme und integrierte Elektrik erwärmt, wodurch ein Beschlagen der Optik verhindert wird. Es werden High-Definition-Bilder in Echtzeit und Millisekunden erzeugt, die eine sehr hohe Auflösung aufweisen. Eine 3-D-Software erzeugt aus diesen Videobildern eine STL-Datei der oralen Situation. Diese STL-Datei wird exportiert und dient dem weiteren Herstellungsprozess der zahnärztlichen Prothetik als Arbeitsgrundlage. Die zahntechnischen Restaurationen werden hierbei mit geeigneten CAD-Programmen auf der Grundlage des durch den Intraoralscanner erhaltenen Modelldatensatzes virtuell konstruiert und als STL-Datensatz exportiert. Mit verschiedenen CAM-gesteuerten Fertigungsanlagen wird die gewünschte zahnmedizinische Rekonstruktion anschließend nach digitalisierten Vorgaben (CAD) aus unterschiedlichen Materialien, wie z.B. Keramik, Legierungen, Titan oder Kunststoffen, angefertigt. Hierbei kommen sowohl subtraktive Fertigungsverfahren, wie das CNC-Fräsen, als auch additive Fertigungsverfahren, wie Selektives Lasersintern, Stereolithographie-Verfahren oder Rapid Prototyping im Druckverfahren, zum Einsatz.

Trotz dieser höchstmodernen Intraoralscanner-Methode ist es aber weiterhin erforderlich, dass ein Arbeitsmodell der Mundsituation zur Verfügung steht. Denn es ist nach Herstellung der zahnmedizinischen Rekonstruktion erforderlich, diese für eine Teil- oder Endbearbeitung auf ein Arbeitsmodell zu setzen. Ein solches Arbeitsmodell muss separat aus dem Datensatz des Intraoral-Scans generiert werden. Eines der bisher gängigsten Verfahren ist die subtraktive Fertigung mit CNC-Fräsen.

Aus der Praxis ist bekannt, dazu einen Gipsrohling, der auch als Gipsblank bezeichnet wird, in Form einer sogenannten Ronde (d.h. einer runden Scheibe) in einer CNC-Fräsmaschine einzuspannen und das Arbeitsmodell anhand des STL-Datensatzes aus der Ronde herauszufräsen.

Nachteilig ist hierbei zum einen, dass dieser Ronden-Rohling im Vergleich zu der zahnmedizinischen Rekontruktion relativ viel Masse aufweist, da er unmittelbar in die Fräsmaschine eingespannt wird. Typischerweise besitzt die Ronde einen Durchmesser von 10 bis 15 cm und eine Höhe von 30 mm. Somit ist es, abgesehen von einem hohen ungenutzten Gipsanteil des Rohlings, erforderlich, dass die herausgefräste zahnmedizinische Konstruktion mit ebenfalls herauszufräsenden Hilfsstreben an dem restlichen Teil des Rohlings befestigt bleibt. Ferner müssen auf der Unterseite des gefrästen Modells Löcher gefräst werden, die mit Pins (Stiften) einer handelsüblichen Basisplatte, auf der das Arbeitsmodell aufzustecken ist, korrespondieren, um so eine Segmentierung eines Zahnkranzes und eine Einzelbearbeitung von Segmenten zu ermöglichen. Eine Einzelbearbeitung schließt ein, dass ein Zahntechniker einzelne Segmente nach einem entsprechenden Schneidvorgang von der Basisplatte abziehen und wieder aufstecken kann. Diese beidseitige Fertigung des Arbeitsmodells aus einer vollen Rohlings-Ronde ist sehr zeitaufwändig, und eine wirtschaftliche Herstellung ist nicht möglich. Zudem besteht der weitere Nachteil, dass beim Herausfräsen der Löcher auf der Unterseite ein gewisses Übermaß der Löcher entsteht, so dass die Stifte ein unerwünschtes Spiel in den Löchern haben und dadurch nicht unerhebliche Ungenauigkeiten entstehen.

Der Erfindung liegt daher die Aufgabe zugrunde, einen gattungsgemäßen Rohling zur Herstellung eines Arbeitsmodells zur Verfügung zu stellen, mit dem der Zeit- und Kostenaufwand für die Herstellung eines Arbeitsmodells verringert und dessen Qualität verbessert ist.

Diese Aufgabe wird durch die Merkmale des Anspruchs 1 gelöst. Der Rohling weist einen Gipsteil und eine Basisplatte auf. Die Basisplatte ist in der Regel aus Kunststoff hergestellt und weist eine Anzahl von Pins auf, die senkrecht von einer oberen Fläche der Basisplatte hervorstehen und in der Regel ebenfalls aus Kunststoff hergestellt sind. Der Gipsteil dient als Masse zur Modellierung, d. h. zum Herausfräsen der zahnmedizinischen Rekonstruktion, und ist mittels der Pins lösbar an der Basisplatte befestigt. Diese Befestigung resultiert aus einem Umgießen der Pins mit dem Gips. Der Gipsteil besitzt einen Zahnbereich, innerhalb dessen der Fräsvorgang stattfindet. Der Zahnbereich besitzt eine solche Form und eine solche Gipsmasse, dass Form und Masse einerseits zur Herstellung eines Arbeitsmodells eines zu modellierenden Gebissabschnitts ausreichend sind und andererseits aber so beschränkt sind, dass sie dem Gebissabschnitt vom Umriss und von der Menge her bereits angenähert sind. Man kann also davon sprechen, dass der Zahnbereich bereits eine Vorform aufweist, die bereits umrisshaft oder schemenhaft dem zu modellierenden Gebissabschnitt bzw. Zahnbogen angenähert ist.

Diese Vorform ermöglicht eine deutliche Zeiteinsparung beim Herausfräsen der Arbeitsmodelle gegenüber der oben beschriebenen herkömmlichen Verwendung einer Ronde. Denn das großflächige Freistellen des Gebissabschnitts und die Anbindung mit Fixierstreben an den Restteil des Rohlings entfällt komplett. Durch die Vormontage des Rohling-Zahnbereichs auf die Basisplatte entfällt weiterhin gegenüber dem Stand der Technik der komplette Schritt der unterseitigen Bearbeitung des Gipsteils bzw. der Ronde, wodurch zusätzlich die Bearbeitungszeit reduziert ist. Damit werden entscheidende Vorteile im Zeitmanagement und im Workflow der Labore erzielt. Aufgrund der Zeitersparnis und der verringerten benötigten Gipsmasse sind auch die Kosten für die Herstellung des Arbeitsmodells reduziert; sie liegen damit in der Größenordnung der Rechnungssätze der Dentallabore.

Insbesondere kann der zu modellierende Gebissabschnitt ein sogenannter Gebissquadrant sein. Hierbei handelt es sich um die Zähne bzw. den Zahnbogen in der linken oder rechten Hälfte des Ober- oder Unterkiefers. Bei einem Gebiss eines Erwachsenen weist ein Quadrant normalerweise acht Zähne (einschließlich Weisheitszahn) auf. Wenn das Arbeitsmodell lediglich auf einen Quadranten beschränkt sein kann, ist die durch die Erfindung ermöglichte Zeit- und Kostenersparnis relativ gesehen besonders groß.

Bei dem durch das Arbeitsmodell wiedergegebenen Gebissabschnitt kann es sich selbstverständlich auch um einen vollständigen Zahnbogen in dem Unter- oder Oberkiefer handeln. Auch in diesem Fall ist die Zeit- und Kostenersparnis bei der Herstellung des Arbeitsmodells gegenüber dem Stand der Technik erheblich. Wenn das Arbeitsmodell einen vollständigen Zahnbogen wiedergibt, kann es vorteilhaft sein, auch den zugehörigen Gaumenbereich im Unter- bzw. Oberkiefer zu modellieren. Dazu kann der Gipsteil des Rohlings zusätzlich einen Gaumenbereich aufweisen, aus dem der Gaumen eines Patienten für das Arbeitsmodell durch Herausfräsen nachgebildet werden kann. Dieser Gaumenbereich ist vorzugsweise integral, also einstückig, mit dem Zahnbereich verbunden sein, so dass speziell für die Befestigung des Gaumenbereichs auf der Basisplatte keine weiteren Pins vorgesehen sein müssen.

Es kann vorgesehen sein, dass der Zahnbereich des Gipsteils lediglich eine Höhe von mindestens 27 mm aufweisen muss. Hierbei handelt es sich um eine Höhe, die geringer ist als die Dicke eine Rohlings in Form einer Ronde. Dies resultiert daraus, dass die Ronde direkt in eine Halterungsvorrichtung einer Fräsmaschine eingespannt werden muss, während der erfindungsgemäße Rohling in einer Halterung fixiert werden kann, die in einer Fräsmaschine fixiert wird.

Der Erfindung liegt ferner die Aufgabe zugrunde, eine Halterung zur Fixierung eines erfindungsgemäßen Rohlings in einer Fräsmaschine zur Verfügung zu stellen.

Diese Aufgabe wird durch die Merkmale des Anspruchs 6 gelöst. Die erfindungsgemäße Halterung weist eine Grundform auf, die einer kreisrunden Scheibe entspricht. Die Halterung besitzt also eine Oberseite, eine Unterseite und eine Randfläche, welche den Umfang der Halterung begrenzt. Die Halterung weicht insofern von einer kreisrunden Scheibe an sich ab, als dass die Oberseite eine oder mehrere Vertiefungen aufweist, die derartig geformt sind, dass sie die Basisplatte eines erfindungsgemäßen Rohlings zumindest teilweise in Bezug auf die Höhe (bzw. Dicke) der Basisplatte aufnehmen kann. Die Basisplatte wird in der Vertiefung durch Befestigungsmittel der Halterung befestigt. Die Halterung weist zum Fixieren in einer Fräsmaschine einen mittleren Randflächenabschnitt auf, der einen größeren Radius besitzt als ein benachbarter oberer und ein benachbarter unterer Randflächenabschnitt. Diese Randflächenkontur dient zum Festklemmen der Halterung in einer Halterungsvorrichtung einer Fräsmaschine. Dazu wird die Halterung in einen unteren Halterungsring gelegt, wobei sie mit ihrem mittleren Randabschnitt auf einem Rand des Halterungsrings aufliegt. Anschließend wird ein oberer Halterungsring auf die erfindungsgemäße Halterung gelegt, so dass diese auf der zwischen dem mittleren und dem oberen Randflächenabschnitt gebildeten Kante bzw. Fläche aufliegt. Beide Ringe der Fräsmaschinen-Halterungsvorrichtung werden anschließend beispielsweise mittels Schrauben zusammengezogen, so dass die erfindungsgemäße Halterung dazwischen festgeklemmt ist. Dieses Prinzip wird bei der Befestigung von runden Rohlingen ebenfalls verwendet, siehe z.B. die EP 1 613 237 B1.

Die erfindungsgemäße Halterung erlaubt eine einfache Fixierung eines erfindungsgemäßen Rohlings in einer Fräsmaschine.

Vorzugsweise können als die Befestigungsmittel der Halterung eine oder mehrere Schrauben vorgesehen sein, mit denen die jeweilige Basisplatte in der Halterung festgeschraubt wird.

Im Folgenden wir die Erfindung anhand eines Ausführungsbeispiels näher erläutert, wobei auf die Figuren Bezug genommen wird. Es zeigen:
Fig. 1 a eine perspektivische Ansicht einer für sich bekannten Basisplatte,
Fig. 1b eine Draufsicht auf die Basisplatte gemäß Fig. 1 a,
Fig. 2 eine perspektivische Ansicht eines ersten erfindungsgemäßen Rohlings,
Fig. 3 eine perspektivische Ansicht eines zweiten erfindungsgemäßen Rohlings,
Fig. 4a eine perspektivische Ansicht auf eine für sich bekannte Basisplatte für einen Rohling, der zur Herstellung eines Arbeitsmodells für einen Gebissquadranten vorgesehen ist,
Fig. 4b eine perspektivische Ansicht der Unterseite der Basisplatte gemäß Fig. 4a,
Fig. 4c eine gegenüber Fig. 4a um etwa 90 Grad gedrehte perspektivische Ansicht der Basisplatte dieser Figur,
Fig. 5a eine perspektivische Ansicht eines Rohlings, der zur Herstellung eines Arbeitsmodells für einen linken Gebissquadranten vorgesehen ist,
Fig. 5b eine perspektivische Ansicht eines Rohlings, der zur Herstellung eines Arbeitsmodells für einen rechten Gebissquadranten vorgesehen ist,
Fig. 6 eine perspektivische Ansicht einer Halterung zur Fixierung eines der Rohlinge gemäß Fig. 2 und mit einer Abänderung auch Fig. 3 in einer Fräsmaschine,
Fig. 7 eine Halterung zur Fixierung eines der beiden Rohlinge gemäß Fig. 5a und Fig. 5b in einer Fräsmaschine,
Fig. 8 einen Ausschnitt gemäß dem jeweiligen Bereich B in den Fig. 7 und 8 aus einem Längsschnitt entsprechend der Schnittlinie A-A in diesen Figuren,
Fig. 9 eine Basisplatte mit einer Schraube zur Befestigung in der Halterung gemäß Fig. 6,
Fig. 10 den erfindungsgemäßen Rohling gemäß Fig. 2 mit einer Schraube zur Befestigung in der Halterung gemäß Fig. 6.

In den Figuren sind gleiche Merkmale mit gleichen Bezugszeichen bezeichnet.

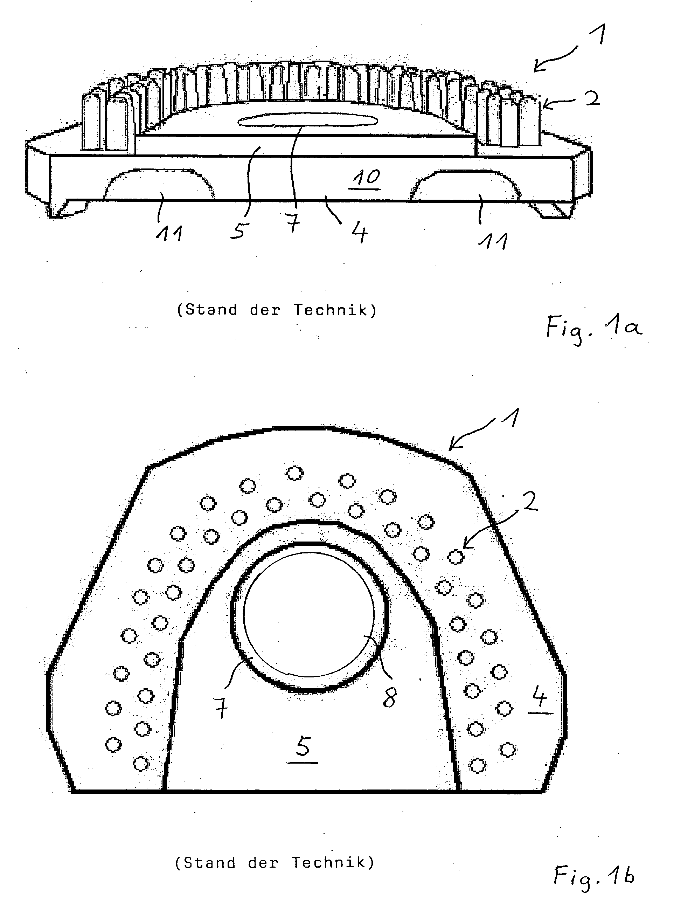

Die Basisplatte gemäß den Fig. 1 a und 1 b ist mit dem Bezugszeichen 1 bezeichnet. Sie weist eine Vielzahl von Pins 2 auf, die senkrecht stehend auf einem Sockelabschnitt 4 angeordnet sind. Innerhalb der Anordnungskontur der Pins 2, die schemenhaft einem Zahnbogen entspricht, befindet sich als Teil des Sockelabschnitts 4 eine Erhöhung 5. Der Sockelabschnitt 4 und die Pins 2 der Basisplatte 1 sind in einem Stück aus Spritzkunststoff hergestellt.

Die Basisplatte 1 ist für sich aus der Praxis bekannt. Der Sockelabschnitt 4 weist ein Loch auf, welches zum Einsetzen eines Magneten (nicht gezeigt) vorgesehen ist, der im Zusammenhang mit der Anbringung der Basisplatte 1 in einem Artikulator dient, nämlich zur Fixierung auf einer Split-Cast-Platte. Das Loch in der Erhöhung 5 ist mit dem Bezugszeichen 7 bezeichnet und weist einen etwas größeren Durchmesser auf als das mit dem Bezugszeichen 8 bezeichnete Loch in dem darunter befindlichen Teil des Sockelabschnitts 4. In einer ebenen Randfläche 10 des Sockelabschnitts 4 sind bogenförmige Vertiefungen 11 geformt, die als Trennhilfe zur Lösung der Basisplatte 1 von einer sogenannten Split-Cast-Platte dienen. Eine Split-Cast-Platte wird zur Anbringung in einem Artikulator verwendet, der zur Simulation eines Kiefergelenks vorgesehen ist, um die Zahnkontakte eines Ober- und eines Unterkiefers zu simulieren. Auch diese Technik ist bekannt, so dass hier darauf nicht weiter eingegangen wird.

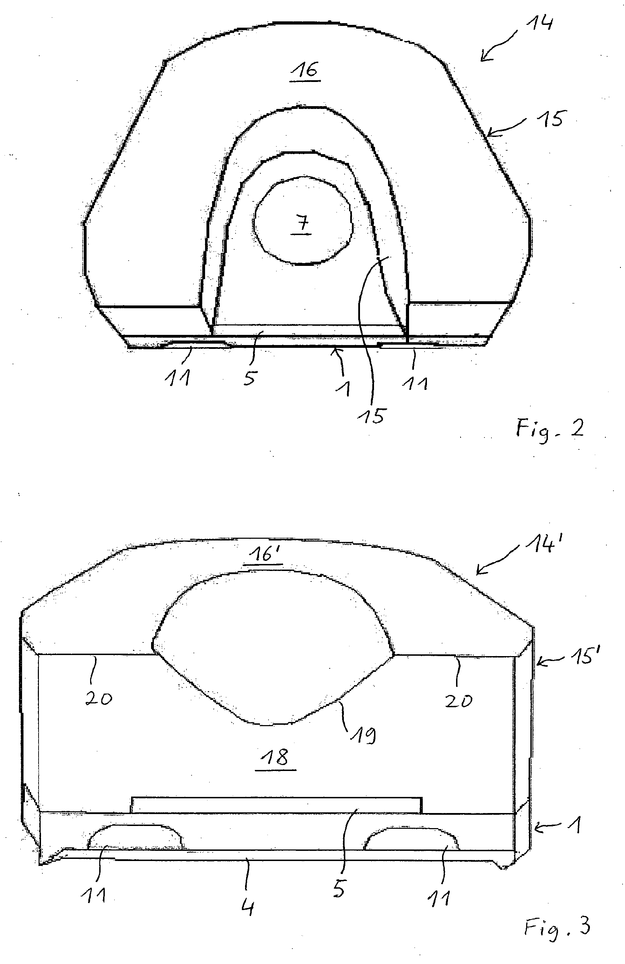

Der erfindungsgemäße Rohling der Fig. 2 ist mit dem Bezugszeichen 14 bezeichnet. Er setzt sich aus der Basisplatte 1 gemäß den Fig. 1 a bzw. 1 b und einem Gipsteil 15 zusammen. Der Gipsteil 15 ist auf der Basisplatte 1 befestigt worden, indem die Pins 2 mit dem für das Gipsteil 15 vorgesehenen Gips umgossen worden sind. In der Fachsprache wird dieses auch mit dem Wort "Adaptierung" des Gipses bezeichnet. Auf die Technik zum Abheben des Gipsteils 15 von der Basisplatte 1 wird hier nicht weiter eingegangen, da sie für sich bekannt ist.

Ein oberer Bereich des Gipsteils 15 dient als Zahnbereich 16. Er weist eine Form und entsprechende Gipsmasse auf, die die Modellierung eines gewünschten Gebissabschnitts ermöglichen, andererseits aber die bei der Modellierung wegzufräsende Masse möglichst gering halten.

Der in Fig. 3 gezeigte weitere erfindungsgemäße Rohling ist mit dem Bezugszeichen 14' bezeichnet. Er unterscheidet sich von dem Rohling 14 gemäß Fig. 2 dadurch, dass er einen Gipsteil 15' aufweist, der außer einem Zahnbereich 16' auch einen Gaumenbereich 18 aufweist. Der Gaumenbereich 18 ist mit dem Zahnbereich 16' integral, d.h. einstückig, verbunden und dient dazu, einen Gaumen zu modellieren, so dass das Arbeitsmodell auch ein Abbild des Gaumens des Patienten enthält. Auch der Gaumenbereich 18 weist im unmodellierten Zustand relativ wenig Gipsmasse auf, indem ein oberer Rand 19 des Gaumenbereichs tiefer verläuft als entsprechende Ränder 20 des Zahnbereichs 16'.

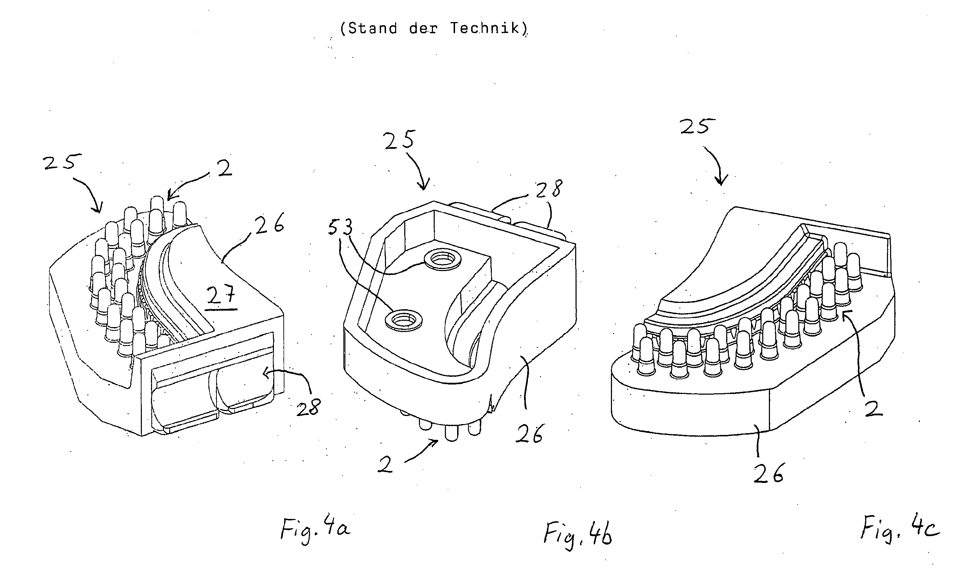

Die für sich bekannte Basisplatte gemäß der Fig. 4a-c ist mit dem Bezugszeichen 25 bezeichnet. Die Basisplatte 25 ist vorgesehen zur Herstellung eines Arbeitsmodells für einen Gebiss- bzw. Zahnbogenquadranten. Sie weist ebenfalls eine Vielzahl von Pins 2 auf, die auf einem Sockelabschnitt 26 befestigt sind und von diesem senkrecht hervorstehen. Eine Erhöhung 27 des Sockelabschnitts 26 sorgt dafür, dass beim Aufbringen eines Gipsteils in diesem Bereich weniger Gipsmasse benötigt wird, da nur der Zahnbogen, nicht aber ein Gaumenbereich zu modellieren ist.

An einer ebenen Randfläche sind Mittel 28 zur Befestigung eines Artikulators angebracht. Wie aus Fig. 4b ersichtlich ist, ist der aus Kunststoff hergestellte Sockelabschnitt 26 zur Material- und Gewichtseinsparung hohl ausgeformt.

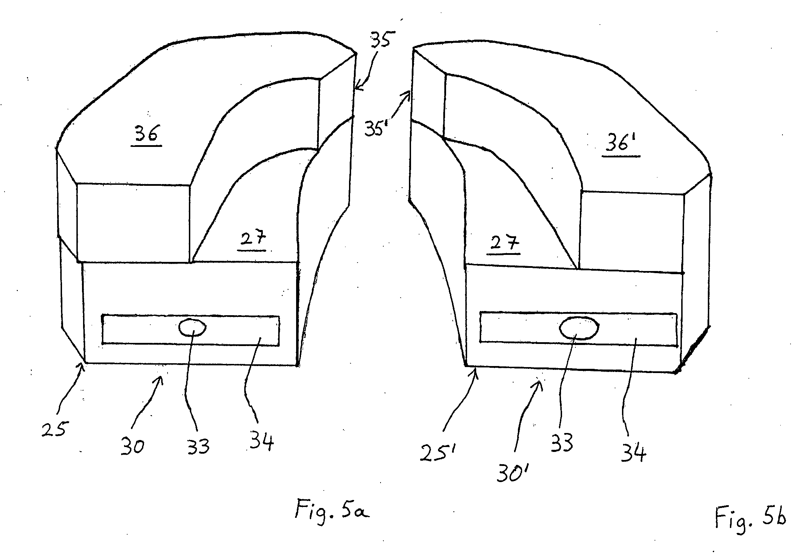

Die Rohlinge der Figuren 5a und 5b sind mit den Bezugszeichen 30 und 30' bezeichnet. Der Rohling 30 weist die Basisplatte 25 auf, wobei sich an dieser allerdings nicht die Befestigungsmittel 28 für einen Artikulator befinden, die mittels eines Loches 33 in einer Vertiefung 34 angebracht werden. Der Rohling 30' besitzt eine Basisplatte 25', die der Basisplatte 25 entspricht. Durch Umgießen der Stifte 2 auf der jeweiligen Basisplatte 25 bzw. 25' ist auf jeder dieser Platten ein Gipsteil 35 bzw. 35' befestigt worden. Auch hier dient jeweils ein oberer Bereich des Gipsteils 35, 35' als Zahnbereich 36 bzw. 36'.

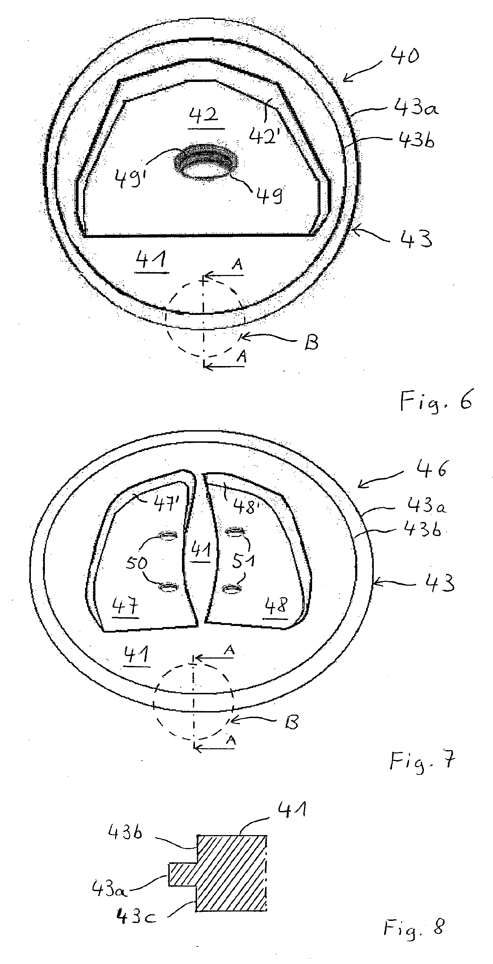

Die Halterung gemäß Fig. 6 ist mit dem Bezugszeichen 40 bezeichnet. Sie ist aus Kunststoff hergestellt und besitzt die Grundform einer kreisrunden Scheibe. In einer Oberseite 41 ist eine Vertiefung 42 mit einer begrenzenden Randfläche 42' geformt, die eine Kontur zur Aufnahme der Basiplatte1 und somit des gesamten Rohlings 14 oder 14' (siehe unten) hat. Eine Randfläche 43 der Halterung 40 weist einen mittleren Randflächenabschnitt 43a, einen an diesen jeweils angrenzenden oberen Randflächenbereich 43b und unteren Randflächenbereich 43c (siehe Fig. 8) auf. Der mittlere Randflächenabschnitt 43a besitzt eine größeren Radius als der obere Randflächenabschnitt 43b und der untere Randflächenabschnitt 43c, die beide denselben Radius besitzen. Die Form der Randfläche 43 dient zum Einspannen der Halterung 40 in einer Halterungsvorrichtung (nicht gezeigt) einer Fräsmaschine. Die Halterung 40 weist eine mittig angeordnete Öffnung 49 mit einem Gewinde 49' auf. Diese Öffnung 49 dient zum Befestigen der Basisplatte 1 in der Vertiefung 42 mittels einer Schraube (siehe unten).

Die Halterung gemäß Fig. 7 ist mit dem Bezugszeichen 46 bezeichnet. Sie entspricht der Halterung 40, abgesehen davon, dass in der Oberseite 41 statt der Vertiefung 42 zwei symmetrisch angeordnete Vertiefungen 47 und 48 angeordnet sind. Diese haben eine jeweilige Randfläche 47' bzw. 48' und eine Kontur, die zur jeweiligen Aufnahme der Basisplatten 25 bzw. 25' und damit der gesamten Rohlinge 30 und 30' dienen. Die Halterung 46 weist in jeder der Vertiefungen 47, 48 jeweils zwei Öffnungen 50 bzw. 51 auf. Die Öffnungen 50, 51 besitzen jeweils ein Gewinde und dienen zum Befestigen der Basisplatten 25 und 25' in den Vertiefungen 47 und 48 mittels Schrauben.

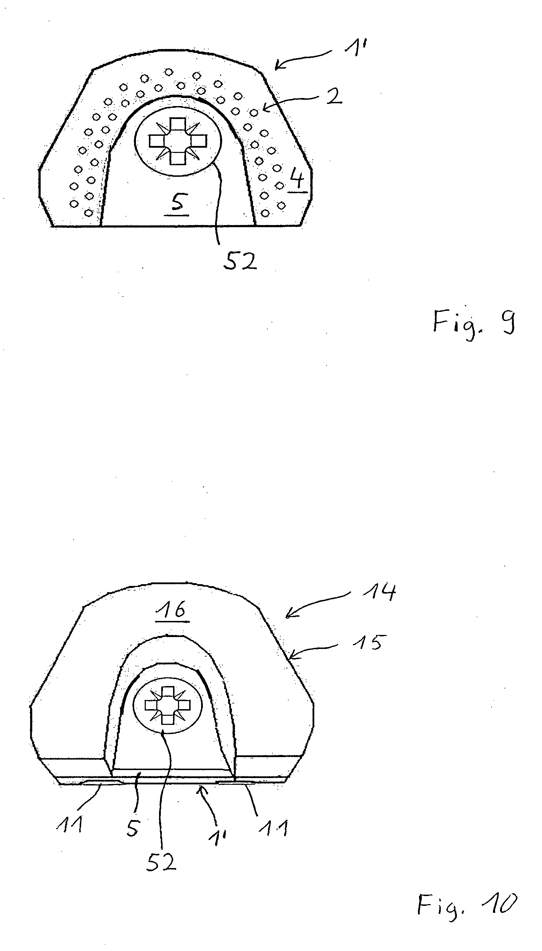

Fig. 9 zeigt eine Basisplatte 1', die sich von der Basisplatte 1 gemäß Fig. 1 nur dadurch unterscheidet, dass sie eine Schraube 52 aufweist. Die Schraube 52 erstreckt sich durch die Löcher 7 und 8 hindurch und dient dazu, die Basisplatte 1' in der Halterung 40 gemäß Fig. 6 durch Eingriff mit der Öffnung 49 bzw. dem Gewinde 49' zu befestigen.

Fig. 10 zeigt den Rohling 14 gemäß Fig. 2 mit der eingesetzten Schraube 52, durch die die Basisplatte 1' und somit der gesamte Rohling 14 wie vorstehend beschrieben in der Halterung 40 befestigt werden kann.

Es kann vorgesehen sein, dass der Rohling 14' gemäß Fig. 3 in der Halterung 40 dadurch befestigt werden kann, dass eine Schraube von unten in die Halterung 40 eingesetzt wird und zum Eingriff der Schraube statt in der Öffnung 49 oder auch zusätzlich in dem Loch 7 bzw. 8 der Basisplatte 1 ein Gewinde vorgesehen ist. Es sind aber auch andere Befestigungsmöglichkeiten, insbesondere Schraubbefestigungen, denkbar.

Entsprechend kann eine Basisplatte für einen Gebiss- bzw. Zahnbogenquadranten in der Halterung 46 gemäß Fig. 7 festgeschraubt werden. Dazu sind zwei Schrauben (nicht gezeigt) vorgesehen, die in die Öffnungen 50 bzw. 51 eingreifen. Die Basisplatte weist dazu entsprechende Löcher auf. Bei der Basisplatte 25 sind zu diesem Zweck zwei Löcher 53 vorgesehen (siehe Fig. 4b), die allerdings in der Basisplatte 25 nur als Möglichkeit angelegt sind, aber noch nicht als wirklich durch den Sockelabschnitt 26 hindurchgehende Bohrung ausgebildet sind, wobei dann einige der Pins 2 wegfallen würden.

**Bezugszeichenliste:**

| | | | |
|---|---|---|---|
| 1, 1' | Basisplatte | 34 | Vertiefung |
| 2 | Pins | 35, 35' | Gipsteil |
| 4 | Sockelabschnitt | 36, 36' | Zahnbereich |
| 5 | Erhöhung | 40 | Halterung |
| 7 | Loch | 41 | Oberseite |
| 8 | Loch | 42 | Vertiefung |
| 10 | Randfläche von 4 | 42' | Randfläche von 42 |
| 11 | Vertiefungen | 43 | Randfläche von 40 |
| 14, 14' | Rohling | 43a | mittlerer Randflächenabschnitt |
| 15, 15' | Gipsteil | 43b | oberer Randflächenabschnitt |
| 16, 16' | Zahnbereich | 43c | unterer Randflächenabschnitt |
| 18 | Gaumenbereich | 46 | Halterung |
| 19 | oberer Rand von 18 | 47 | Vertiefung |
| 20 | Ränder von 16' | 47' | Randfläche von 47 |
| 25, 25' | Basisplatte | 48 | Vertiefung |
| 26 | Sockelabschnitt von 25 | 48' | Randfläche von 48 |
| 27 | Erhöhung von 26 | 49 | Öffnung |
| 28 | Befestigungsmittel für einen Artikulator | 50, 51 49' | Gewinde Öffnung |
| 30, 30' | Rohling | 52 | Schraube |
| 33 | Loch | 53 | Loch |

## Patentansprüche

1. Rohling (14; 14'; 30; 30') zur Herstellung eines Arbeitsmodells, welches als Arbeitsmittel bei der Anfertigung einer zahnmedizinischen Rekonstruktion dient, wobei der Rohling (14; 14'; 30; 30') als ein Herstellungmaterial zumindest Gips aufweist,
**dadurch gekennzeichnet, dass** der Rohling (14; 14'; 30; 30') einen zur Modellierung vorgesehenen Gipsteil (15; 15'; 35; 35') und eine Basisplatte (1, 1'; 25; 25') aufweist,
wobei der Gipsteil (15; 15'; 35; 35') einen Zahnbereich (16; 16'; 36; 36') mit einer Form und einer Gipsmasse aufweist, die beide einerseits zur Herstellung eines Arbeitsmodells eines zu modellierenden Gebissabschnitts ausreichend sind und andererseits so beschränkt sind, dass sie dem Gebissabschnitt umrisshaft und mengenmäßig bereits angenähert sind,
wobei die Basisplatte (1, 1'; 25; 25') mehrere Pins (2) besitzt, mit denen der Gipsteil (15; 15'; 35; 35') an der Basisplatte (1, 1'; 25; 25') durch ein Umgießen der Pins (2) lösbar befestigt ist.

2. Rohling (14; 14'; 30; 30') nach Anspruch 1,
**dadurch gekennzeichnet, dass** es sich bei dem Gebissabschnitt um einen Gebissquadranten handelt.

3. Rohling (14; 14'; 30; 30') nach Anspruch 1,
**dadurch gekennzeichnet, dass** es sich bei dem Gebissabschnitt um einen vollständigen Zahnbogen handelt.

4. Rohling (14') nach Anspruch 3,
**dadurch gekennzeichnet, dass** der Gipsteil (15') zusätzlich einen Gaumenbereich (18) aufweist, der zur Modellierung eines Gaumens vorgesehen ist.

5. Rohling (14; 14'; 30; 30') nach einem der vorhergehenden Ansprüche,
**dadurch gekennzeichnet, dass** der Zahnbereich (16; 16'; 36; 36') des Gipsteils (15; 15'; 35; 35') eine Höhe von mindestens 27 mm aufweist.

6. Halterung (40; 46) zur Fixierung eines Rohlings (14; 14'; 30; 30') nach einem der vorhergehenden Ansprüche in einer Fräsmaschine,
wobei die Halterung (40; 46) eine Grundform gemäß einer kreisrunden Scheibe mit einer Oberseite (41), einer Unterseite und einer den Umfang begrenzenden Randfläche (43) aufweist,
wobei die Randfläche (43) sich zusammensetzt aus einem mittleren Randflächenabschnitt (43a) sowie einem zu jeder Seite an diesen angrenzenden oberen (43b) und unteren (43c) Randflächenabschnitt,
wobei der mittlere Randflächenabschnitt (43a) einen größeren Radius aufweist als der obere (43b) und der untere (43c) Randflächenabschnitt,
wobei die Oberseite (41) mindestens eine derartig geformte Vertiefung (42; 47, 48) aufweist, dass sie die Basisplatte (1, 1'; 25; 25') des Rohlings (14; 14'; 30; 30') zumindest teilweise aufnehmen kann,
wobei die Halterung (40; 46) Mittel (49, 49', 52; 50, 51) zur Befestigung der Basisplatte (1'; 25; 25') in der Vertiefung (42; 47, 48) aufweist.

7. Halterung (40; 46) nach Anspruch 6,
wobei die Befestigungsmittel (49, 49', 52; 50, 51) mindestens eine Schraube (52) aufweisen.
